# EUROPEAN PATENT SPECIFICATION

(11) **EP 0 698 056 B1**
(45) Date of publication and mention of the grant of the patent: **11.02.2004**
(21) Application number: 94916174.9
(22) Date of filing: 29.04.1994
(51) Int. Cl.: C08K 7/14, C08L 67/02, C08J 5/18, C08G 63/20

(54) **ARTICLES FROM A POLYESTER RESIN REINFORCED WITH GLASS FIBRE**
MIT GLASFASER VERSTÄRKTER POLYESTERHARZARTIKEL
ARTICLES EN RESINE POLYESTER RENFORCEE PAR DES FIBRES DE VERRE

(30) Priority: 07.05.1993 IT MI930916
(43) Date of publication of application: 28.02.1996
(73) Proprietor: COBARR S.p.A., 03012 Anagni (Frosinone) (IT)
(72) Inventor: AL GHATTA, Hussain, Ali, Kashif, I-03014 Fiuggi (IT); SEVERINI, Tonino, I-00034 Colleferro (IT); COBROR, Sandro, I-80131 Napoli (IT)
(74) Representative: Gerbino, Angelo
(86) International application number: PCT/EP1994/001368
(87) International publication number: WO 1994/026814

(56) References cited:
- EP-A- 0 422 282
- US-A- 3 553 157

## Description

The present invention relates to a process for the preparation of glass fibre reinforced articles from polyester resin.

It is known that the addition of glass fibre to the polyester resin may improve the mechanical properties of the resins and particularly their impact strength.

It is known from USP 3,553, 157 that the production of articles with thick walls by shaping the resin in the molten state may be carried out in the presence of polyfunctional compounds capable to react with the polyester resin end groups and to chain extend the polymer, in order to counterbalance thermal degradation reactions which occur during the shaping process of the article.

It is possible to obtain shaped articles with sufficiently high values of intrinsic viscosity to ensure the necessary mechanical properties of the article.

In USP patent 3,553,157 are described also glass fibres reinforced articles.

The fibres are preferably used in a quantity between about 10 and 45% by weight.

The most preferred polyfunctional compounds are polyisocyanates. The use of tetracarboxylic acid dianhydrides and particularly the use of pyromellitic dianhydride (PMDA) is also described.

As already indicated, the presence of polyfunctional compounds during the shaping phase allows to obtain shaped articles with intrinsic viscosity higher than that of the starting polymer, and which, in the case of the polyisocyanates, can be up to 3dl/g or more.

Regarding the use of PMDA, the highest I.V value is about 0.84 dl/g.

The I.V. increase depends on the PMDA concentration; it reaches a peak and then decreases.

The highest increase is obtained when the PMDA concentration corresponds to that necessary to react with all the reactive groups of the resin. The viscosity decreases when PMDA is used in an excess to said value.

Regarding the shaping of articles reinforced with glass fibres, it has been observed that the polymer intrinsic viscosity is considerably lower than the value obtainable in shaped articles which are not reinforced with glass fibres. Apparently the glass fibres contribute to degradation reactions in the polyester. Such degradation renders it difficult in pratice to manufacture shaped articles reinforced with glass fibres having I.V. values sufficiently high to obtain good mechanical properties.

It has been unexpectedly found, and this is in contrast with the teaching given in USP 3,553,157, that it is possible to obtain, by a specific melt shaping process of polyester resins, articles reinforced with glass fibres having sufficiently high values of I.V. to provide the shaped article with mechanical properties of high interest.

The melt-shaping process of the invention comprises the two steps defined in the characterising part of Claim 1 using residence times during the melt-shaping (ie. during the second step wherein the polyester that has been treated with the dianhydride is blended with glass fibres) lower than 120 sec., preferably comprised between 20 and 100 sec. and temperatures of the molten resin lower than 300°C, preferably comprised between 260 and 280°C.

The residence time generally decreases with increasing temperature.

The polymer intrinsic viscosity in the shaped article is higher than 0.6 dl/g and is preferably comprised between 0-7 and 1.8 dl/g.

According to the method of the invention, the resin and the polyfunctional compound are blended in the molten state at temperatures lower than 300 °C and with residence times lower than 200 sec. preferably between 20 and 100 sec.

The obtained extrudate, e.g. in the form of chips, is fed e.g. to a co-rotating twin screw extruder; the glass fibres are then fed and blended with the molten polymer and the mixture is extruded to shape the article. The residence time of the mixture blended with the glass fibres is lower than 120 sec.

The shaped article can be subjected to a solid state polyaddition treatment carried out at a temperature between 180 and 200°C to obtain an additional increase of polymer intrinsic viscosity and also a higher dimensional stability and resistance to thermal deformation. The I.V. after the upgrading treatment can attain values higher than 1.0 dl/g.

Cooling of the shaped article can be carried out slowly and in a controlled way to allow polymer crystallization even without using a thermal after-treatments; such treatment would gene-rally be carried out at temperatures higher than 100°, preferably between 140 and 170°.

The crystallization step brings about improvements of certain mechanical properties such as the flexural strength, but it tends to reduce the impact strength.

The polyfunctional compound is preferably selected from the dianhydrides of aromatic tetracarboxylic acids. Pyromellitic dianhydride is the preferred compound. Other usable dianhydrides are those of 3,3' 4,4' diphenyltetracarboxylic acid, (perylene 3, 4, 9, 10) tetracarboxylic acid, 3,3' 4,4' - benzophenonetetracarboxylic acid, 2,2 - bis(3,4-dicarboxyphenyl) propane, bis (3,4 - dicarboxyphenyl) ether bis (3, 4 dicarboxyphenyl) sulfone; and 2, 3, 4, 5 tetracarboxytetrahydrofuran. The polyfunctional compounds are preferably used in a quantity from 0.05 to 2% by weight of the resin.

The addition of glass fibres considerably increases impact strength, flexural modulus and stress at break of the shaped articles.

The use of quantities of about 5% by weight has already the effect to improve the mechanical properties; the preferred concentration of glass fibres is generally comprised between 10 and 50% by weight.

The glass fibres have generally a length from 0,2 to 1 mm.

The finishing agents are of known type and include compounds such as vinyltrichlorosilane, methacrylates of Cr and of other metals or titanium alcoholates.

Conventional additives can be added to the resin such as stabilizers, antioxidants, plasticizers, nucleating compounds, pigments, flame retardant compounds and inert reinforcing fillers such as calcium carbonate or talc.

The glass reinforced resins usable in the process of the invention, due to their melt-rheological properties characterized by high shear sensitivity are particularly suitable for foaming end extrusion blow-moulding applications.

The polyester resins used in the process of the invention are the product of a polycondensation reaction of an aromatic dicarboxylic acid such as terephthalic acid or its derivatives such as the dimethylester or of naphathalenedicarboxylic acids with diols with 2-12 carbon atoms such as ethylene glycol, 1.4-cyclohexanediol or 1.4-butanediol.

Other suitable polyesters are copolymers in which part of the units deriving from terephthalic acid (up to about 25%) are replaced by units from isophthalic acid or other dicarboxylic acids.

Polyethyleneterephthalate and polynaphthalenates are the preferred resins.

The polyester resin can be mixed with other compatible polymers such as polycarbonates or polycaprolactone in amounts up to 20% by weight.

The addition of small amounts up to 5% by weight of polymers or compounds hawing properties of liquid crystals and containing reactive groups such as OH and NH₂ groups improves the mechanical properties.

### EXAMPLE 1

30 Kg/h of polyethyleneterephthalate (PET) having a melting point of 253°C and intrinsic viscosity of 0.66 dl/g are continuously fed from the melt-polycondensation section of a PET plant to a counter-rotating non-intermeshing twin screw extruder with 30 mm diameter and with outgassing device 590 g/h of a mixture of 20% by weight of pyromellitic dianhydride (PMDA) and crystalline PET (I.V. = 0.64 dl/g) are continuously fed to the extruder by using a gravimetric dosing device.

The test conditions were as follows:
- pyromellitic dianhydride in the melt = 0.6% by weight
- screw speed = 415 RPM
- screw ratio length (L/D) = 24
- Average residence time = 18-25 sec
- barrel temperature = 283°C
- melt temperature = 290°C

A die with double hole is used for the extrusion diameter = 7 mm).

A strand pelletizer is used to obtain cylindrical chips with 3 mm diameter and 5 mm length. The chips, intrinsic viscosity is 0.65 dl/g.

10 Kg/h of so obtained chips are fed after drying to a twin screw extruder with diameter 70 mm and ratio L/D 32.

After polymer melting (L/D = 12) the given glass fibre amount is fed through a lateral port.

The remaining length (20 L/D) is used for mixing the glass fibres with the polymer. The residence time in the extruder is 60-90 sec.

The mixture is extruded through a flat die of 750 mm length and collected on 3 cooled drums and then further cooled to stabilize the obtained foil. A part of the foil. is subjected to upgrading at 190°C for 12 hours.

The mechanical properties are shown in the table below wherein the mechanical properties of the foil not subjected to upgrading are also reported.

The mechanical properties were determined at room temperature with a Histron Series 4500 machine, operating at 10 mm/min.

At least 5 specimens for each sample were tested.

The impact properties were determined by using a Tester Izod Ceast using a 2J hammer and notched specimens.

**TABLE**

| | | FOILS | | Intrinsic Vistosity dl/g | Tensile Modulus GPa | IZOD impact Strength J/m |
|---|---|---|---|---|---|---|
| 1) | PET | | | | 2.5 | 30 |
| 2) | PET + 0.4% PMDA | | | | 2.5 | 38 |
| 3) | PET + 20% glass fibres | | | 0.80 | 4-7.1 (*) | 87 |
| | + 0.4% PMDA | | | | | |
| 4) | PET + 30% glass fibres | | | 0.850 | 5.1-9.4 (*) | 118 |
| | + 0.4% PMDA | | | | | |
| 5) | PET + 40% glass fibres | | | 0.860 | 6.2-14.8 (*) | 140 |
| | + 0.4% PMDA | | | | | |
| 1) | after upgrading at 90°Cx12h | | | | 3.4 | |
| 2) | " | " | " | | 3.5 | |
| 3) | " | " | " | 0.85 | 4.9-8.7 (*) | 80 |
| 4) | " | " | " | 0.920 | 6-11 (*) | 90 |
| 5) | " | " | " | 0.950 | 6.4-13.3 (*) | 118 |

| | | | | | | |
|---|---|---|---|---|---|---|
| (*) The highest values refer to the extrusion direction, the lowest ones to the orthogonal direction. | | | | | | |

### EXAMPLE 2

Results similar to those reported in example 1 were obtained using PET scraps having I.V. = 0.62 dl/g and a melting point of 253°C instead of the PET of example 1.

## Claims

1. Process for the preparation of glass fibre reinforced articles from a polyester resin, by melt-mixing and extruding the resin with a polyfunctional compound capable of increasing the intrinsic viscosity of the polymer by addition reaction with the resin end groups and selected from the dianhydrides of aromatic tetracarboxylic acids and 2, 3, 4, 5-tetracarboxytetrahydrofuran, using residence times lower than 200 s and temperatures of the molten phase lower than 300 °C,
said process being **characterised in that** the extrudate of the resin and the polyfunctional compound is melt-mixed with the glass fibres and the resulting blend is melt-shaped with residence times lower than 120 s and temperatures of the molten phase lower than 300 °C, obtaining final articles having intrinsic viscosity higher than 0.6 dl/g.

2. Process according to claim 1 , wherein the glass fibre is used in a quantity between 10 and 50 by weight.

3. Process according to claims L or 2, wherein the polyfunctional compound is pyromellitic dianhydride used in a quantity from 0.05 to 2% by weight of the resin.

## Patentansprüche

1. Verfahren zur Herstellung von glasfaserverstärkten Artikeln aus einem Polyesterharz durch Mischen der Schmelze und Extrudieren des Harzes mit einer polyfunktionalen Komponente, welche dazu geeignet ist, die intrinsische Viskosität des Polymers durch Additionsreaktion mit den Endgruppen des Harzes zu erhöhen und welche aus Dianhydriden von aromatischen tetracarboxylischen Säuren und 2, 3, 4, 5 - Tetracarboxy-tetrahydrofuran ausgewählt ist, unter Verwendung von Verweilzeiten kleiner als 200 s und Temperaturen der geschmolzenen. Phase unter 300° C, wobei dieses Verfahren **dadurch gekennzeichnet ist, dass** das Extrudat des Harzes und die polyfunktionale Komponente in Schmelze mit den Glasfasern gemischt wird und die resultierende Mischung geschmolzen geformt wird mit Verweilzeiten kleiner als 120 s und Temperaturen der geschmolzenen Phase kleiner als 300° C, wobei Endprodukte mit einer intrinsischen Viskosität größer als 0,6 dl/g hergestellt werden.

2. Verfahren nach Anspruch 1, wobei die Glasfasern mit einem Anteil zwischen 10 und 50 Gewichtsprozent verwendet werden.

3. Verfahren nach Anspruch 1 oder 2, wobei die polyfunktionale Komponente pyromellitisches Dianhydrid ist, welches mit einem Anteil von 0,05 bis 2 Gewichtsprozent des Harzes verwendet wird.

## Revendications

1. Procédé de préparation d'articles renforcés en fibre de verre à partir d'une résine polyester, en mélangeant à l'état fondu et extrudant la résine avec un composé polyfonctionnel capable d'augmenter la viscosité intrinsèque du polymère par réaction d'addition avec les groupes terminaux de la résine et sélectionné parmi les dianhydrides des acides tétracarboxyliques aromatiques et le 2, 3, 4, 5-tétracarboxytétrahydrofurane, utilisant des temps de séjour inférieurs à 200 sec. et des températures de phase fondue inférieures à 300°C,
ledit procédé étant **caractérisé en ce que** l'extrudat de la résine et le composé polyfonctionnel est mélangé à l'état fondu avec les fibres de verre et le mélange résultant est mis en forme à l'état fondu avec des temps de séjour inférieurs à 120 sec. et des températures de la phase fondue inférieures à 300°C, obtenant des articles finaux ayant une viscosité intrinsèque supérieure à 0,6 dl/g.

2. Procédé selon la revendication 1, dans lequel la fibre de verre est utilisée en une quantité entre 10 et 50% en poids.

3. Procédé selon les revendications 1 ou 2, dans lequel le composé polyfonctionnel est le dianhydride pyromellitique utilisé en une quantité de 0,05 à 2% en poids de résine.
